# EUROPÄISCHE PATENTSCHRIFT

(11) **EP 1 826 019 B1**
(45) Veröffentlichungstag und Bekanntmachung des Hinweises auf die Patenterteilung: **09.12.2009**
(21) Anmeldenummer: 06110239.8
(22) Anmeldetag: 21.02.2006
(51) Int. Cl.: B41M 5/50

(54) **Aufzeichnungsmaterial für den Tintenstrahldruck**
Recording sheet for ink jet printing
Feuille d'enregistrement pour l'impression par jet d'encre

(43) Veröffentlichungstag der Anmeldung: 29.08.2007
(73) Patentinhaber: ILFORD Imaging Switzerland GmbH, 1723 Marly 1 (CH)
(72) Erfinder: Beer, Robert, 1723, Marly (CH); Brugger, Pierre-Alain, 1731, Ependes (CH); Ruffieux, Vincent, 1724, Praroman (CH); Staiger, Martin, 89198, Westerstetten (DE); Steiger, Rolf, 1724, Le Mouret (CH)

(56) Entgegenhaltungen:
- EP-A- 1 346 840
- EP-A- 1 364 800

## Beschreibung

### Technisches Gebiet

Die vorliegende Erfindung bezieht sich auf ein Aufzeichnungsmaterial für den Tintenstrahldruck, das dadurch gekennzeichnet ist, dass es auf einem Träger mindestens zwei Tintenaufnahmeschichten aufweist, wobei die dem Träger benachbarte Schicht neben mindestens einem Bindemittel nanoporöses Siliziumdioxid mit einer positiv geladenen Oberfläche enthält und die vom Träger weiter entfernte Schicht neben mindestens einem Bindemittel nanokristallines, nanoporöses Aluminiumoxid oder Aluminiumoxid/hydroxid enthält.

### Stand der Technik

Es gibt im wesentlichen zwei unterschiedliche Verfahren beim Tintenstrahldruck, nämlich den kontinuierlichen und den nichtkontinuierlichen Tintenstrahldruck.
Beim kontinuierlichen Tintenstrahldruck wird unter Druck aus einer Düse ein Tintenstrahl ausgestossen, der in einem gewissen Abstand von der Düse in einzelne Tröpfchen zerfällt. Die einzelnen Tröpfchen werden, je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, bei dem ungeladene Tröpfchen im Auffangbehälter aufgefangen werden.
Beim nichtkontinuierlichen Verfahren, dem so genannten "Drop on demand", werden die Tintentröpfchen nur dann erzeugt und aus der Düse ausgestossen, wenn auf Grund der digitalen Daten ein Bildpunkt dargestellt werden muss.
Heutige Tintenstrahldrucker müssen aus wirtschaftlichen Gründen immer schneller drucken können. Für solche Drucker geeignete Aufzeichnungsmaterialien müssen deshalb die Tinten besonders rasch aufnehmen können. Für diesen Zweck besonders geeignet sind Aufzeichnungsmaterialien, die nanoporöse anorganische Verbindungen, vorzugsweise Oxide, insbesondere Aluminiumoxide oder Siliziumdioxid, oder Oxid/hydroxide, insbesondere Aluminiumoxid/hydroxide, enthalten. Solche Materialien sind als "nanoporöse" Aufzeichnungsmaterialien bekannt.

Nanoporöse Aufzeichnungsmaterialien für den Tintenstrahldruck, welche nanokristallines, nanoporöses Aluminiumoxid oder Aluminiumoxid/hydroxid enthalten, werden beispielsweise in der Patentanmeldung EP 0'298'424 beschrieben.

Die Bildqualität wird verbessert, wenn das nanokristalline, nanoporöse Aluminiumoxid oder Aluminiumoxid/hydroxid eines oder mehrere Elemente aus der Gruppe der seltenen Erden des periodischen Systems der Elemente, vorzugsweise Lanthan, enthält. Solche Aufzeichnungsmaterialien werden beispielsweise in der Patentanmeldung EP 0'875'394 beschrieben.
Es ist von Vorteil, wenn die positive Oberflächenladung des nanokristallinen, nanoporösen Aluminiumoxids oder Aluminiumoxid/hydroxids durch eine Behandlung mit Aluminiumchlorhydrat erhöht wird, wie es beispielsweise in der Patentanmeldung EP 1'437'228 beschrieben wird.

Aufzeichnungsmaterialien, welche nanokristallines, nanoporöses Aluminiumoxid oder Aluminiumoxid/hydroxid enthalten, ergeben eine ausgezeichnete Bildqualität und zeigen wegen der geringen Teilchengrösse des Aluminiumoxids oder Aluminiumoxid/hydroxids einen sehr hohen Glanz und eine hervorragende Transparenz. Ihr Tintenabsorptionsvermögen ist aber wegen des relativ tiefen Porenvolumens erst bei einer hohen Menge des nanokristallinen, nanoporösen Aluminiumoxids oder Aluminiumoxid/hydroxids genügend hoch. Wegen der notwendigen hohen Menge an Aluminiumoxid oder Aluminiumoxid/hydroxid und deren hoher Preise sind deshalb die Herstellungskosten solcher Aufzeichnungsmaterialien hoch. Die Herstellungsgeschwindigkeit ist wegen der notwendigen hohen Auftragsmenge der Tintenaufnahmeschichten relativ tief.

In der Patentanmeldung DE 10'020'346 wird ein Aufzeichnungsmaterial vorgeschlagen, das in der Gasphase hergestelltes Siliziumdioxid mit einer Primärpartikelgrösse von höchstens 20 nm enthält, worin die Oberfläche des Siliziumdioxids mit Polyaluminiumhydroxychlorid modifiziert wurde.
In der Patentanmeldung WO 00/20'221 wird die Umsetzung von in der Gasphase hergestelltem Siliziumdioxid mit Aluminiumchlorhydrat beschrieben. Das umgesetzte Siliziumdioxid mit positiv geladener Oberfläche wird anschliessend in eine Tintenaufnahmeschicht von nanoporösen Aufzeichnungsmaterialien für den Tintenstrahldruck eingebracht.

Die Patentanmeldung WO 02/094'573 beschreibt die Verwendung von in der Gasphase hergestelltem Siliziumdioxid, welches mit Aminoorganosilanen umgesetzt wurde, in Aufzeichnungsmaterialien für den Tintenstrahldruck.
Die Patentanmeldung WO 01/05'599 beschreibt die Verwendung von Siliziumdioxid-Pigmenten, welche mit kationischen Aminoorganosiloxanen umgesetzt wurden, in Aufzeichnungsmaterialien für den Tintenstrahldruck.

In den Patentanmeldungen EP 1'346'840 und EP 1'364'800 werden nanoporöse Aufzeichnungsmaterialien für den Tintenstrahldruck beschrieben, welche zwischen dem Träger und einer Tintenaufnahmeschicht, die nanokristallines, nanoporöses Aluminiumoxid oder Aluminiumoxid/hydroxid enthält, zur Verbesserung der Haftung zwischen dem Träger und der Tintenaufnahmeschicht eine Zwischenschicht aufweisen, die nanoporöses Siliziumdioxid mit einer positiv geladenen Oberfläche enthält.

Die Patentanmeldung EP 0'983'867 beschreibt die Verwendung von kolloidalem Siliziumdioxid, welches mit Silanen der allgemeinen Formel (R₁)ₙSi(OR₂)₄₋ₙ, worin mindestens einer der Substituenten R₁ eine Aminogruppe enthält, umgesetzt wurde, in Aufzeichnungsmaterialien für den Tintenstrahldruck.

In der Patentanmeldung EP 1'655'348 wird ein Verfahren für die Oberflächenmodifizierung von nanoporösem Siliziumdioxid beschrieben, in welchem das nanoporöse Siliziumdioxid mit den Reaktionsprodukten mindestens eines Aminoorganosilans und einer Verbindung des dreiwertigen Aluminiums, beispielsweise Aluminiumchlorhydrat, umgesetzt wird. Dieses umgesetzte nanoporöse Siliziumdioxid wird anschliessend in eine Tintenaufnahmeschicht eines nanoporösen Aufzeichnungsmaterials für den Tintenstrahldruck eingebracht.

Nanoporöse Aufzeichnungsmaterialien für den Tintenstrahldruck, die über einer Tintenaufnahmeschicht, welche nanoporöses Siliziumdioxid mit einem Porenradius zwischen 4 nm und 25 nm enthält, eine Tintenaufnahmeschicht aufweisen, welche nanokristallines, nanoporöses Aluminiumoxid/hydroxid, beispielsweise Pseudo-Böhmit, enthält, werden beispielsweise in der Patentanmeldung EP 0'631'013 beschrieben.

Aufzeichnungsmaterialien, welche nanoporöses Siliziumdioxid enthalten, zeigen schon bei einer relativ geringen Menge des nanoporösen Siliziumdioxids wegen des hohen Porenvolumens des Siliziumdioxids ein grosses Tintenaufnahmevermögen. Deshalb sind solche Aufzeichnungsmaterialien wegen der ziemlich geringen notwendigen Auftragsmenge des nanoporösen Siliziumdioxids und dessen relativ tiefen Preises ziemlich kostengünstig herstellbar. Die Herstellungsgeschwindigkeit ist wegen der relativ geringen Auftragsmenge des nanoporösen Siliziumdioxids hoch. Allerdings lassen sowohl die Bildqualität wie auch die Transparenz solcher Aufzeichnungsmaterialien zu wünschen übrig.

Nanokristallines, nanoporöses Aluminiumoxid oder Aluminiumoxid/hydroxid hat ein Porenvolumen, das im allgemeinen um einen Faktor 1.4 bis 2.0 mal kleiner ist als dasjenige von nanoporösem Siliziumdioxid. Deshalb ist mit nanokristallinem, nanoporösem Aluminiumoxid/hydroxid die benötigte Menge zur Absorption einer bestimmten Menge einer wässrigen Tinte etwa um den Faktor 1.4 bis 2.0 höher als im Falle von nanoporösem Siliziumdioxid.

Es besteht daher weiterhin die Notwendigkeit, in Aufzeichnungsmaterialien, die nanokristalline, nanoporöse anorganische Verbindungen enthalten, neben dem Tintenaufnahmevermögen, der Tintenaufnahmegeschwindigkeit, der Wasserfestigkeit, der Lichtbeständigkeit usw. vor allem die Bildqualität und den Glanz sowohl mit Tinten auf Farbstoffbasis wie auch mit Tinten auf Pigmentbasis zu verbessern sowie die Herstellungskosten zu senken.

### Zusammenfassung der Erfindung

Ziel der Erfindung ist die Bereitstellung eines nanoporösen Aufzeichnungsmaterials mit verbesserter Bildqualität und verringerten Herstellungskosten. Insbesondere sollten die sehr gute Bildqualität von nanoporösen Aufzeichnungsmaterialien auf der Basis von nanokristallinem, nanoporösem Aluminiumoxid oder Aluminiumoxid/hydroxid mit den geringen Herstellungskosten von nanoporösen Aufzeichnungsmaterialien auf der Basis von nanoporösem Siliziumdioxid kombiniert werden.
Wir haben nun überraschend gefunden, dass dieses Ziel unter geeigneten Bedingungen mit einem Aufzeichnungsmaterial erreicht wird, bei dem auf einen Träger mindestens zwei nanoporöse Tintenaufnahmeschichten aufgebracht worden sind, wobei die dem Träger benachbarte Schicht neben mindestens einem Bindemittel nanoporöses Siliziumdioxid mit einer positiv geladenen Oberfläche und die vom Träger weiter entfernte Schicht neben mindestens einem Bindemittel vor allem nanokristallines, nanoporöses Aluminiumoxid oder Aluminiumoxid/hydroxid enthält, wie in Anspruch 1 beschrieben wird.
In einer bevorzugten Ausführungsart der Erfindung enthält die vom Träger weiter entfernte Schicht vorteilhaft zusätzlich zum nanokristallinen, nanoporösen Aluminiumoxid oder Aluminiumoxid/hydroxid noch nanoporöses Siliziumdioxid mit einer positiv geladenen Oberfläche, bevorzugt in einer Menge von 0.5 Gewichtsprozent bis 15 Gewichtsprozent bezogen auf die Gesamtmenge des Aluminiumoxids oder Aluminiumoxid/hydroxids und des Siliziumdioxids mit einer positiv geladenen Oberfläche.
In einer anderen bevorzugten Ausführungsart der Erfindung enthält das erfindungsgemässe Aufzeichnungsmaterial zwischen der dem Träger benachbarten Schicht, welche nanoporöses Siliziumdioxid mit einer positiv geladenen Oberfläche enthält, und der vom Träger weiter entfernten Schicht, welche nanokristallines, nanoporöses Aluminiumoxid oder Aluminiumoxid/hydroxid sowie gegebenenfalls zusätzlich noch nanoporöses Siliziumdioxid mit einer positiv geladenen Oberfläche enthält, eine Zwischenschicht, welche aus nanokristallinem, nanoporösem Aluminiumoxid, Aluminiumoxid/hydroxid oder nanoporösem Siliziumdioxid mit einer positiv geladenen Oberfläche, oder einem Gemisch dieser Verbindungen, ohne oder mit einem geringen Anteil Bindemittel besteht.

Solche Aufzeichnungsmaterialien haben gleichzeitig sowohl eine ausgezeichnete Bildqualität wie diejenige von nanoporösen Aufzeichnungsmaterialien auf der Basis von nanokristallinem, nanoporösem Aluminiumoxid oder nanokristallinem, nanoporösem Aluminiumoxid/hydroxid sowie das hohe Tintenabsorptionsvermögen von nanoporösen Aufzeichnungsmaterialien auf der Basis von nanoporösem Siliziumdioxid.

### Ausführliche Beschreibung der Erfindung

Das erfindungsgemässe Aufzeichnungsmaterial hat mindestens zwei auf einen Träger aufgebrachte nanoporöse Tintenaufnahmeschichten, wobei die dem Träger benachbarte Schicht neben mindestens einem Bindemittel nanoporöses Siliziumdioxid mit einer positiv geladenen Oberfläche enthält und die vom Träger weiter entfernte Schicht neben mindestens einem Bindemittel vor allem nanokristallines, nanoporöses Aluminiumoxid oder nanokristallines, nanoporöses Aluminiumoxid/hydroxid enthält, wie im Anspruch 1 beschrieben.
Überraschenderweise wird die Bildqualität mit steigender Menge des nanoporösen Siliziumdioxids mit positiv geladener Oberfläche in der unteren nanoporösen Tintenaufnahmeschicht nicht immer besser, obwohl das Tintenaufnahmevermögen eines solchen Aufzeichnungsmaterials ständig zunimmt. Die Bildqualität wird wieder schlechter, wenn die Menge des nanoporösen Siliziumdioxids mit positiv geladener Oberfläche in der dem Träger benachbarten Schicht 12.5 g/m² übersteigt. Mit dieser Menge ist aber das Tintenaufnahmevermögen noch nicht genügend hoch. Dieser Befund ist überraschend, da man bei einer verbesserten Lösungsmittelabsorption dank steigender Menge des nanoporösen Siliziumdioxids mit positiv geladener Oberfläche eine stetig zunehmende Bildqualität erwarten würde.
Die Bildqualität wird verbessert, wenn in einer ersten bevorzugten Ausführungsart der Erfindung dem nanokristallinen, nanoporösen Aluminiumoxid oder nanokristallinen, nanoporösen Aluminiumoxid/hydroxid in der oberen Tintenaufnahmeschicht nanoporöses Siliziumdioxid mit positiv geladener Oberfläche hinzugefügt wird, bevorzugt in einer Menge von 0.5 bis 15 Gewichtsprozent bezogen auf die Gesamtmenge an nanokristallinem, nanoporösem Aluminiumoxid oder Aluminiumoxid/hydroxid und nanoporösem Siliziumdioxid mit positiv geladener Oberfläche in dieser Schicht.
Die Bildqualität wird ebenfalls verbessert, wenn in einer zweiten bevorzugten Ausführungsart der Erfindung das Aufzeichnungsmaterial zwischen der unteren, nanoporöses Siliziumdioxid mit positiv geladener Oberfläche enthaltenden Tintenaufnahmeschicht und der oberen, nanokristallines, nanoporöses Aluminiumoxid oder Aluminiumoxid/hydroxid, sowie gegebenenfalls zusätzlich 0.5 bis 15 Gewichtsprozent nanoporöses Siliziumdioxid mit positiv geladener Oberfläche bezogen auf die Gesamtmenge an nanokristallinem, nanoporösem Aluminiumoxid oder Aluminiumoxid/hydroxid und nanoporösem Siliziumdioxid mit positiv geladener Oberfläche, enthaltenden Tintenaufnahmeschicht eine bindemittelarme oder bindemittelfreie Schicht bestehend aus nanokristallinem, nanoporösem Aluminiumoxid und/oder Aluminiumoxid/hydroxid, nanoporösem Siliziumdioxid oder einem Gemisch dieser Verbindungen aufweist.

Bei Tintenaufnahmeschichten für den Tintenstrahldruck hat sich herausgestellt, dass nur der Zusatz von nanoporösen anorganischen Verbindungen, deren mittels der BET-Isotherme bestimmtes Porenvolumen ≥ 20 ml / 100 g ist, die Aufnahmegeschwindigkeit und die Aufnahmekapazität für wässrige Tinten wesentlich erhöht. Dieses BET-Verfahren ist eine Methode zur Messung der Oberfläche eines pulverförmigen Materials durch ein Gasphasenadsorptionsverfahren, bei dem die spezifische Oberfläche und davon ausgehend das Porenvolumen aus einer Adsorptionsisotherme bestimmt wird, wie es beispielsweise von S. Brunauer, P. H. Emmet und E. Teller, "Adsorption of Gases in Multimolecular Layers", Journal of the American Chemical Society 60, 309 - 319 (1938) und von S. Brunauer, L. S. Deming, W. E. Deming und E. Teller, "On a Theory of the van der Waals Adsorption of Gases", Journal of the American Chemical Society 62, 1723 - 1732 (1940) beschrieben wird. Nur solche anorganischen Verbindungen sollen im weiteren als "nanoporös" betrachtet werden.

Ziel der Erfindung ist somit die Bereitstellung eines möglichst herstellungsfreundlichen und kostengünstigen nanoporösen Aufzeichnungsmaterials mit ausgezeichneter Bildqualität, welches das tiefstmögliche Porenvolumen für eine vollständige Tintenaufnahme besitzt.

Im erfindungsgemässen Aufzeichnungsmaterial wird γ-Al₂O₃ als nanokristallines, nanoporöses Aluminiumoxid und Pseudo-Böhmit der Formel Al₂O₃ • n H₂O (n = 1 bis 1.5) als nanokristallines, nanoporöses Aluminiumoxid/hydroxid bevorzugt.
Im erfindungsgemässen Aufzeichnungsmaterial wird mit Salzen der seltenen Erden dotiertes Aluminiumoxid/hydroxid als nanokristallines, nanoporöses Aluminiumoxid/hydroxid besonders bevorzugt, wie beispielsweise in der Patentanmeldung EP 0'875'394 beschrieben wird. Dieses nanokristalline, nanoporöse Aluminiumoxid/hydroxid enthält ein oder mehrere Elemente der Ordnungszahl 57 bis 71 des Periodischen Systems der Elemente, bevorzugt in einer Menge zwischen 0.2 und 2.5 Molprozent bezogen auf Al₂O₃.

Das im erfindungsgemässen Aufzeichnungsmaterial bevorzugte Aluminiumoxid/hydroxid oder das mit Lanthan dotierte Aluminiumoxid/hydroxid hat eine Grösse der Primärpartikel von 5 nm bis 15 nm.
Im erfindungsgemässen Aufzeichnungsmaterial können zwei verschiedene Arten von nanoporösem Siliziumdioxid verwendet werden, erstens ein in einem Nassverfahren hergestelltes ausgefälltes Siliziumdioxid und zweitens ein in einem Gasphasenverfahren hergestelltes pyrogenes Siliziumdioxid. Dieses pyrogene Siliziumdioxid wird im allgemeinen in einem Flammenhydrolyseverfahren hergestellt, beispielsweise durch Verbrennung von Siliziumtetrachlorid mit Wasserstoff und Sauerstoff. Beispiele eines solchen pyrogenen Siliziumdioxids sind Aerosil^{®} 200 und Aerosil^{®} 200 V (SiO₂ mit einem isoelektrischen Punkt bei einem pH-Wert von 2.0), beide erhältlich bei DEGUSSA AG, Frankfurt/Main, Deutschland. Diese beiden Substanzen haben gemäss ihren Datenblättern die gleiche spezifische BET-Oberfläche von etwa 200 m²/g und die gleiche Primärpartikelgrösse von etwa 12 nm. Ein weiteres Beispiel ist Cab-O-Sil^{®} M-5, erhältlich bei Cabot Corporation, Billerica, USA. Dieses Produkt hat gemäss seinem Datenblatt eine spezifische BET-Oberfläche von etwa 200 m²/g und die Agglomerate sind 0.2 µm bis 0.3 µm lang.
In der vorliegenden Erfindung wird vorzugsweise pyrogenes Siliziumdioxid mit einer durchschnittlichen Grösse der Primärpartikel von höchstens 20 nm und einer spezifischen Oberfläche von mindestens 150 m²/g, bestimmt mit dem BET-Verfahren, verwendet.
Die Oberfläche eines solchermassen hergestellten nanoporösen Siliziumdioxids ist negativ geladen. Damit die normalerweise in den Tinten enthaltenen, negativ geladenen farbgebenden Verbindungen im nanoporösen Aufzeichnungsmaterial gut fixiert werden, muss die Oberfläche des nanoporösen Siliziumdioxids derart modifiziert werden, dass sie positiv geladen wird.

Ein durch Behandlung mit Aluminiumchlorhydrat oberflächenmodifiziertes Siliziumdioxid ist ein bevorzugtes Siliziumdioxid mit einer positiv geladenen Oberfläche für das erfindungsgemässe Aufzeichnungsmaterial.

Ein durch Behandlung mit einem Aminoorganosilan oberflächenmodifiziertes Siliziumdioxid ist ebenfalls ein bevorzugtes Siliziumdioxid mit einer positiv geladenen Oberfläche für das erfindungsgemässe Aufzeichnungsmaterial.

Ein durch Behandlung mit den Reaktionsprodukten mindestens eines Aminoorganosilans und einer Verbindung des dreiwertigen Aluminiums, beispielsweise Aluminiumchlorhydrat, oberflächenmodifiziertes Siliziumdioxid ist ein besonders bevorzugtes Siliziumdioxid mit einer positiv geladenen Oberfläche für das erfindungsgemässe Aufzeichnungsmaterial.

Zur Herstellung von solchem oberflächenmodifiziertem Siliziumdioxid wird beispielsweise pyrogenes Siliziumdioxid bei hohen Scherraten zu einer zur Hauptsache wässrigen Lösung, welche die Reaktionsprodukte einer Verbindung des dreiwertigen Aluminiums (beispielsweise Aluminiumchlorhydrat) und mindestens eines Aminoorganosilans enthält, zugegeben. Dabei entsteht unter geeigneten Bedingungen eine oberflächenmodifizierte Dispersion von pyrogenem Siliziumdioxid, die nicht koaguliert. Das Gemisch, welches die Reaktionsprodukte einer Verbindung des dreiwertigen Aluminiums (beispielsweise Aluminiumchlorhydrat) und mindestens eines Aminoorganosilans enthält, zeigt eine hohe Pufferkapazität. Das basische Aminoorganosilan neutralisiert die bei der Hydrolyse der Verbindung des dreiwertigen Aluminiums (beispielsweise Aluminiumchlorhydrat) entstehende Salzsäure. Die zur Oberflächenmodifikation des Siliziumdioxids benötigte minimale Menge der Verbindung des dreiwertigen Aluminiums (beispielsweise Aluminiumchlorhydrat) ist viel geringer ist als bei der Oberflächenmodifikation mit Aluminiumchlorhydrat allein. Diese oberflächenmodifizierten Dispersionen des Siliziumdioxids weisen einen viel geringeren Salzgehalt auf als bei der Modifizierung mit Aluminiumchlorhydrat.

Die zur Umsetzung verwendeten Reaktionsprodukte aus einer Verbindung des dreiwertigen Aluminiums (beispielsweise Aluminiumchlorhydrat) und mindestens eines Aminoorganosilans können sowohl durch Zugabe des Aminoorganosilans zu einer wässrigen Lösung der Verbindung des dreiwertigen Aluminiums (beispielsweise Aluminiumchlorhydrat) wie auch in der umgekehrten Reihenfolge hergestellt werden. Die Umsetzung der Verbindung des dreiwertigen Siliziums und des Aminoorganosilans zu den Reaktionsprodukten erfolgt bei Temperaturen zwischen 10° C und 50° C während 5 Minuten bis 60 Minuten. Bevorzugt ist die Umsetzung bei Raumtemperatur während 10 Minuten bis 15 Minuten.
Die Oberflächenmodifizierung des Siliziumdioxids mit den Reaktionsprodukten aus einer Verbindung des dreiwertigen Aluminiums (beispielsweise Aluminiumchlorhydrat) und mindestens eines Aminoorganosilans verläuft rascher als die Oberflächenmodifizierung des Siliziumdioxids mit Aluminiumchlorhydrat. Deshalb kann bei der Oberflächenmodifizierung mit den Reaktionsprodukten aus einer Verbindung des dreiwertigen Aluminiums (beispielsweise Aluminiumchlorhydrat) und mindestens eines Aminoorganosilans entweder die Reaktionszeit verkürzt oder die Reaktionstemperatur erniedrigt werden.
Besonders bevorzugt für die Oberflächenmodifizierung mit den Reaktionsprodukten aus einer Verbindung des dreiwertigen Aluminiums (beispielsweise Aluminiumchlorhydrat) und mindestens eines Aminoorganosilans ist pyrogenes Siliziumdioxid.

An Stelle nur eines pyrogenen Siliziumdioxid-Pulvers kann eine Mischung verschiedener pyrogener Siliziumdioxid-Pulver mit unterschiedlichen Primärteilchengrössen eingesetzt werden. Die Umsetzung der Siliziumdioxid-Pulver mit den Reaktionsprodukten aus einer Verbindung des dreiwertigen Aluminiums (beispielsweise Aluminiumchlorhydrat) und mindestens eines Aminoorganosilans kann entweder für jedes Siliziumdioxid-Pulver allein oder mit der Mischung der verschiedenen Siliziumdioxid-Pulver erfolgen.

Die Dispergierung bei hohen Scherraten ergibt eine gleichmässige Verteilung der Reaktionsprodukte auf dem Siliziumdioxid. Weiter wird das rheologische Verhalten der Dispersion verbessert.

Bevorzugte Verbindungen des dreiwertigen Aluminiums sind Aluminiumchlorid, Aluminiumnitrat, Aluminiumacetat, Aluminiumformiat und Aluminiumchlorhydrat.

Geeignete Aminoorganosilane sind Aminoorganosilane der Formel (I) 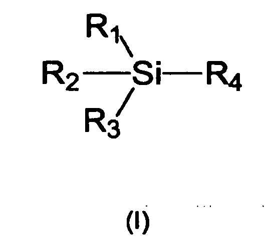 worin
- R₁, R₂, R₃: unabhängig voneinander für Wasserstoff, einen Hydroxylrest, einen unsubstituierten oder substituierten Alkylrest mit 1 bis 6 Kohlenstoffatomen, einen unsubstituierten oder substituierten Arylrest, einen unsubstituierten oder substituierten Alkoxylrest mit 1 bis 6 Kohlenstoffatomen oder einen unsubstituierten oder substituierten Aryloxylrest stehen
und
- R₄: für einen organischen Rest steht, der mit mindestens einer primären, sekundären oder tertiären Aminogruppe substituiert ist.

Im Falle von substituierten R₁, R₂ und R₃ werden die Substituenten unabhängig voneinander aus der Gruppe bestehend aus Thiol, Sulfid und Polyalkylenoxid ausgewählt. Geeignet ausgewählte Substituenten erleichtern beispielsweise die Oberflächenmodifizierung des Siliziumdioxids (verbesserte Rheologie der Dispersionen und der Beschichtungslösungen) und verbessern die Produkteigenschaften wie beispielsweise die Beständigkeit gegenüber Luftschadstoffen, die Lichtechtheit und die physikalischen Eigenschaften.
Anstelle der monomeren Aminoorganosilane können ebenfalls deren Kondensationsprodukte eingesetzt werden, wobei die Kondensationsreaktionen sowohl zwischen identischen als auch zwischen unterschiedlichen Aminoorganosilanen erfolgen können.

Bevorzugte Aminoorganosilane sind 3-Aminopropyltrimethoxysilan, N-(2-Aminoethyl)-3-aminopropyltrimethoxysilan, (3-Triethoxysilylpropyl)-diethylentriamin, 3-Aminopropyltriethoxysilan, N-(2-Aminoethyl)-3-amino-propyltriethoxysilan, (3-Triethoxysilylpropyl)-diethylentriamin und deren Gemische.

In einer besonders bevorzugten Ausführungsart der Erfindung wird das Aminoorganosilan vor dem Zusatz einer Verbindung des dreiwertigen Aluminiums (beispielsweise Aluminiumchlorhydrat) zum Reaktionsgemisch mit CO₂ unter Bildung eines Ammoniumorganosilans (protonierte Form eines Aminoorganosilans) und Hydrogencarbonat umgesetzt. Dadurch wird der pH-Wert des Reaktionsgemisches, welches die Reaktionsprodukte aus einer Verbindung des dreiwertigen Aluminiums (beispielsweise Aluminiumchlorhydrat) und mindestens eines Aminoorganosilans enthält, gesenkt und seine Pufferkapazität erhöht. Dadurch lässt sich der Anteil der bei der Bildung der Reaktionsprodukte einer Verbindung des dreiwertigen Aluminiums (beispielsweise Aluminiumchlorhydrat) und mindestens eines Aminoorganosilans als unerwünschte Nebenprodukte entstehenden, sehr hochmolekularen und teilweise unlöslichen Aluminiumverbindungen reduzieren. Der pH-Wert bleibt folglich bei der Zugabe des unmodifizierten Siliziumdioxids annähernd konstant.

Im erfindungsgemässen Aufzeichnungsmaterial wird vorzugsweise pyrogenes Siliziumdioxid mit einer Grösse der Primärpartikel von höchstens 20 nm verwendet.

Mit Aluminiumchlorhydrat modifiziertes pyrogenes Siliziumdioxid ist im erfindungsgemässen Aufzeichnungsmaterial ein bevorzugtes Siliziumdioxid mit positiv geladener Oberfläche.

Mit einem Aminoorganosilan modifiziertes pyrogenes Siliziumdioxid ist im erfindungsgemässen Aufzeichnungsmaterial ein bevorzugtes Siliziumdioxid mit positiv geladener Oberfläche.
Das mit den Reaktionsprodukten aus einer Verbindung des dreiwertigen Aluminiums (beispielsweise Aluminiumchlorhydrat) und mindestens eines Aminoorganosilans modifizierte pyrogene Siliziumdioxid ist im erfindungsgemässen Aufzeichnungsmaterial das besonders bevorzugte Siliziumdioxid mit positiv geladener Oberfläche.

Das Aufzeichnungsmaterial kann neben den nanoporösen anorganischen Verbindungen zusätzlich noch andere, nach der vorherigen Definition nicht nanoporöse anorganische Verbindungen enthalten.

Die dem Träger benachbarte nanoporöse Tintenaufnahmeschicht enthält neben den Bindemitteln zwischen 5 g/m² und 25 g/m² nanoporöses Siliziumdioxid mit einer positiv geladenen Oberfläche. Besonders bevorzugt ist der Bereich zwischen 10 g/m² und 20 g/m². Diese Schicht enthält 10 bis 40 Gewichtsprozent Bindemittel bezogen auf die Gesamtmasse der Schicht, vorzugsweise 15 bis 30 Gewichtsprozent. Das bevorzugte Bindemittel in dieser Schicht ist Polyvinylalkohol.

Die vom Träger weiter entfernte nanoporöse Tintenaufnahmeschicht enthält neben den Bindemitteln zwischen 1 g/m² und 20 g/m² nanokristallines, nanoporöses Aluminiumoxid, nanokristallines, nanoporöses Aluminiumoxid/hydroxid oder mit Salzen der seltenen Erden dotiertes nanokristallines, nanoporöses Aluminiumoxid/hydroxid, nanoporöses Siliziumdioxid mit positiv geladener Oberfläche oder ein Gemisch dieser Verbindungen. Besonders bevorzugt ist der Bereich zwischen 3 g/m² und 15 g/m². Diese Schicht enthält 3 bis 20 Gewichtsprozent Bindemittel bezogen auf die Gesamtmasse der Schicht, vorzugsweise 5 bis 14 Gewichtsprozent. Das bevorzugte Bindemittel in dieser Schicht ist Polyvinylalkohol.

Die bindemittelfreie oder bindemittelarme Zwischenschicht enthält zwischen 1 g/m² und 20 g/m² nanokristallines, nanoporöses Aluminiumoxid, nanokristallines, nanoporöses Aluminiumoxid/hydroxid oder mit Salzen der seltenen Erden dotiertes nanokristallines, nanoporöses Aluminiumoxid/hydroxid, nanoporöses Siliziumdioxid mit positiv geladener Oberfläche oder ein Gemisch dieser Verbindungen. Besonders bevorzugt ist der Bereich zwischen 2 g/m² und 10 g/m². Diese Schicht enthält 0 bis 20 Gewichtsprozent Bindemittel bezogen auf die Gesamtmasse der Schicht, vorzugsweise 0.1 bis 10 Gewichtsprozent. Besonders bevorzugt sind allerdings Schichten, die kein Bindemittel enthalten. Das bevorzugte Bindemittel in dieser Schicht ist, falls es vorhanden ist, Polyvinylalkohol.

Die Bindemittel sind im allgemeinen wasserlösliche Polymere. Besonders bevorzugt sind filmbildende Polymere.
Die wasserlöslichen Polymere umfassen beispielsweise natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolysierte Gelatinen, wie auch substituierte Gelatinen, beispielsweise phthalierte, acetylierte oder carbamoylierte Gelatine, oder mit Trimellithsäureanhydrid umgesetzte Gelatine.
Ein bevorzugtes natürliches Bindemittel ist Gelatine.
Synthetische Bindemittel können ebenfalls verwendet werden und umfassen beispielsweise Polyvinylalkohol, Polyvinylpyrrolidon, vollständig oder teilweise verseifte Verbindungen von Copolymeren aus Vinylacetat und anderen Monomeren; Homopolymere oder Copolymere von ungesättigten Carbonsäuren wie Maleinsäure, (Meth)acrylsäure, Crotonsäure usw.; Homopolymere oder Copolymere aus sulfonierten Vinylmonomeren wie beispielsweise Vinylsulfonsäure, Styrolsulfonsäure usw. Ebenfalls können Homopolymere oder Copolymere aus Vinylmonomeren von (Meth)acrylamid; Homopolymere oder Copolymere anderer Monomerer mit Ethylenoxid; Polyurethane; Polyacrylamide; wasserlösliche Nylonpolymere; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolysierte Polyvinylacetate; Polyamide; Polyvinylpyridine; Polyacrylsäure; Copolymere mit Maleinsäureanhydrid; Polyalkylenoxide; Copolymere mit Methacrylamid und Copolymere mit Maleinsäure eingesetzt werden. Alle diese Polymere können auch als Mischungen verwendet werden.
Ein bevorzugtes synthetisches Bindemittel ist Polyvinylalkohol.
Bevorzugt werden Polyvinylakohole mit einem Hydrolysegrad zwischen 70 % und 99 %, insbesondere zwischen 88 % und 98 %, und einem Molekulargewicht zwischen 14'000 und 300'000, insbesondere zwischen 100'000 und 200'000, oder Mischungen von Polyvinylakoholen mit unterschiedlichem Molekulargewicht und/oder Hydrolysegrad.
Diese Polymere können mit wasserunlöslichen natürlichen oder synthetischen hochmolekularen Verbindungen gemischt werden, insbesondere mit Acryllatices oder Styrolacryllatices.

Obwohl wasserunlösliche Bindemittel nicht explizit beansprucht werden, so sollen wasserunlösliche Polymere trotzdem als Systembestandteil angesehen werden.
Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie beispielsweise der Flüssigkeitsaufnahme, oder der Widerstandsfähigkeit gegen Schichtverletzungen.
Die Vernetzer und Härter werden auf Grund der zu vernetzenden wasserlöslichen Polymere ausgesucht.
Organische Vernetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)ethylether), reaktive Halogenverbindungen (wie 2,4-Dichloro-6-Hydroxy-s-Triazin); Epoxide; Aziridine; Carbamoylpyridinverbindungen oder Mischungen zweier oder mehrere dieser erwähnten Vernetzer.
Anorganische Vernetzer und Härter umfassen beispielsweise Chromalaun, Aluminiumalaun oder Borsäure.
Die Schichten können auch reaktive Substanzen enthalten, welche die Schichten unter Einwirkung von UV-Licht, Elektronenstrahlen, Röntgenstrahlen oder Wärme vernetzen.

Eine grosse Vielfalt an Trägern ist bekannt und wird auch eingesetzt. So können alle Träger, die bei der Herstellung von photographischen Materialien verwendet werden, eingesetzt werden. Verwendet werden beispielsweise transparente Träger aus Celluloseestern wie Cellulosetriacetat, Celluloseacetat, Cellulosepropionat, oder Celluloseacetat/butyrat, Polyester wie Polyethylenterephthalat oder Polyethylennaphthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat oder Polyethylennaphthalat wegen ihrer ausgezeichneten Dimensionsstabilität. Bei den in der photographischen Industrie eingesetzten opaken Trägern können beispielsweise Barytpapier, mit Polyolefinen beschichtete Papiere, weissopake Polyester wie z. B. Melinex^{®} der Firma DuPont eingesetzt werden. Besonders bevorzugt sind polyolefinbeschichtete Papiere oder weissopaker Polyester.
Es ist vorteilhaft, diese Träger, insbesondere Polyester, vor dem Beguss mit einer Substrierschicht zu versehen, um die Haftung der Tintenaufnahmeschichten auf dem Träger zu verbessern. Solche Substrierschichten sind in der photographischen

schen Industrie wohlbekannt und enthalten z. B. Terpolymere aus Vinylidenchlorid, Acrylnitril und Acrylsäure oder aus Vinylidenchlorid, Methylacrylat und Itaconsäure. An Stelle der Substrierschicht können die Träger vor dem Beguss auch einer Coronaentladung ausgesetzt werden.
Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und Hochglanzpapiere können ebenfalls verwendet werden, wie auch Metallfolien beispielsweise aus Aluminium.
Die Schichten können ebenfalls auf textile Fasermaterialien aus beispielsweise Polyamiden, Polyester, Baumwolle, Viskose und Wolle aufgebracht werden.

Die erfindungsgemässen Tintenaufnahmeschichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Neben ihrer Wirkung während des Giessvorgangs können diese Verbindungen auch einen Einfluss auf die Bildqualität haben und können deshalb dementsprechend ausgewählt werden. Obwohl solche oberflächenaktiven Verbindungen in der Erfindung nicht beansprucht werden, bilden sie trotzdem einen wesentlichen Bestandteil der Erfindung.
Zusätzlich zu den schon erwähnten Bestandteilen können die erfindungsgemässen Aufzeichnungsmaterialien zusätzliche Verbindungen enthalten, um ihre Eigenschaften weiter zu verbessern, so beispielsweise optische Aufheller zur Verbesserung des Weissgrades, wie Stilbene, Cumarine, Triazine, Oxazole oder weitere dem Fachmann bekannte Verbindungen.
Zur Verbesserung der Lichtechtheit können UV-Absorber, wie 2-Hydroxybenztriazole, 2-Hydroxybenzophenone, Triazin-Derivate oder Zimtsäure-Derivate. Die Menge des UV-Absorbers beträgt 200 mg/m² bis 2000 mg/m², vorzugsweise 400 mg/m² bis 1000 mg/m². Der UV-Absorber kann in jede Schicht des erfindungsgemässen Aufzeichnungsmaterials eingebracht werden, besonders vorteilhaft ist aber, wenn er in die oberste Schicht eingebracht wird.
Es ist weiter bekannt, dass die im Tintenstrahldruck hergestellten Bilder durch den Zusatz von Radikalfängern, Stabilisatoren, Reduktionsmitteln und Antioxidantien geschützt werden können. Beispiele solcher Verbindungen sind sterisch gehinderte Phenole, sterisch gehinderte Amine, Chromanole, Ascorbinsäure, Phosphinsäuren und deren Derivate, schwefelhaltige Verbindungen wie Sulfide, Mercaptane, Thiocyanate, Thioamide oder Thioharnstoffe.

Die erwähnten Verbindungen können als wässrige Lösungen zu den Giesslösungen zugesetzt werden. Falls die Verbindungen nicht genügend wasserlöslich sind, können sie durch andere, bekannte Verfahren in die Giesslösungen eingebracht werden. So können die Verbindungen beispielsweise in einem mit Wasser mischbaren organischen Lösungsmittel wie niedere Alkohole, Glykole, Ketone, Ester oder Amide gelöst werden. Es ist auch möglich, die Verbindungen als feinkörnige Dispersionen, als Ölemulsionen, als Cyclodextran-Einschlussverbindungen oder als Latex, der die Verbindung enthält, in die Giesslösung einzubringen.
Normalerweise hat das erfindungsgemässe Aufzeichnungsmaterial eine Trockenschichtdicke von 0.5 µm bis 100 µm, insbesondere aber von 5 µm bis 50 µm.
Die Giesslösungen können auf verschiedene Arten auf den Träger aufgebracht werden. Die Giessverfahren schliessen beispielsweise den Extrusionsguss, den Luftmesserguss, den Schlitzguss, den Kaskadenguss und den Vorhangguss ein. Die Giesslösungen können auch mit einem Sprühverfahren aufgebracht werden. Die Tintenaufnahmeschichten können aus mehreren Einzelschichten bestehen, die einzeln nacheinander oder gemeinsam aufgebracht werden können. Ein Träger kann auch beidseitig mit Tintenaufnahmeschichten begossen werden. Es ist auch möglich, auf der Rückseite eine antistatische Schicht oder eine Schicht zur Verbesserung der Planlage aufzubringen. Das gewählte Giessverfahren schränkt die Erfindung aber in keiner Art und Weise ein.
Bevorzugte Giessverfahren für das erfindungsgemässe Aufzeichnungsmaterial, sind der Kaskaden- oder Vorhangguss, in denen alle Schichten gleichzeitig auf den Träger aufgebracht werden.

Tinten für den Tintenstrahldruck bestehen im wesentlichen aus einer flüssigen Trägersubstanz und einem darin gelösten oder dispergierten Farbstoff oder Pigment. Die flüssige Trägersubstanz für Tintenstrahldrucktinten ist im allgemeinen Wasser oder eine Mischung aus Wasser und einem mit Wasser mischbaren Lösungsmittel wie Ethylenglykol, Glykole mit höherem Molekulargewicht, Glycerin, Dipropylenglykol, Polyethylenglykol, Amide, Polyvinylpyrrolidon, N-Methylyrrolidon, Cyclohexylpyrrolidon, Carbonsäuren und deren Ester, Ether, Alkohole, organische Sulfoxide, Sulfolan, Dimethylformamid, Dimethylsulfoxid, Cellosolve, Polyurethane, Acrylate usw.
Die nichtwässrigen Tintenbestandteile dienen allgemein als Feuchthalter, Hilfslösungsmittel, Viskositätsregler, Eindringhilfsmittel oder Trocknungsbeschleuniger. Die organischen Verbindungen besitzen meistens einen Siedepunkt, der über dem von Wasser liegt. Tinten für den kontinuierlichen Tintenstrahldruck können weiter anorganische oder organische Salze zur Erhöhung der Leitfähigkeit enthalten. Beispiele solcher Salze sind Sulfate, Nitrate, Chloride und Phosphate, sowie die wasserlöslichen Salze organischer Säuren wie Acetate, Oxalate und Citrate. Die Farbstoffe oder Pigmente, die zur Herstellung der zusammen mit den erfindungsgemässen Aufzeichnungsmaterialien verwendbaren Tinten eingesetzt werden können, enthalten praktisch alle bekannten Klassen dieser farbigen Verbindungen. Typische Beispiele verwendeter, wasserlöslicher Farbstoffe werden von M. Fryberg, "Dyes for Ink-Jet Printing", Review of Progress in Coloration 35, 1 - 30 (2005) beschrieben. Die erfindungsgemässen Aufzeichnungsmaterialien können mit fast allen dem Stand der Technik entsprechenden Tinten verwendet werden.
Zusätzlich können die Tinten weitere Zusätze enthalten wie oberflächenaktive Substanzen, optische Aufheller, UV-Absorber, Lichtstabilisatoren, Konservierungsmittel, Fällmittel wie mehrfach geladene Metallverbindungen und polymere Verbindungen.
Die Beschreibung der Tinten dient nur als Illustration und ist in bezug auf die Erfindung in keiner Weise einschränkend.

Die vorliegende Erfindung wird durch die folgenden Beispiele näher beschrieben, ohne dass sie dadurch in irgendeiner Weise eingeschränkt würde.

### Prüfungen

### 1. Bildhomogenität

Auf die erfindungsgemässen Aufzeichnungsmaterialien, wie sie in den folgenden Beispielen beschrieben werden, wurden mit einem Tintenstrahldrucker EPSON 890 (Druckereinstellungen: Premium Glossy Photo Paper, 720 dpi, High Speed) mit Originaltinten Farbfelder in den 7 Farben Blaugrün, Purpur, Gelb, Schwarz, Rot, Grün und Blau gedruckt. Darüber wurde mit der schwarzen Tinte gleichzeitig ein kontinuierlicher Farbkeil (von 0 % bis 100 % Schwarz) gedruckt. Nach der Trocknung wurde die Homogenität der einzelnen Farbkeile bezüglich Koaleszenz mit Hilfe der folgenden Skala beurteilt:
- Teilwert 0:: Farbkeil zeigt Koaleszenz (Zusammenlaufen der Tintentropfen), welche von Auge sichtbar ist
- Teilwert 0.5:: Farbkeil zeigt Koaleszenz, die aber nur mit einer Lupe feststellbar ist
- Teilwert 1:: Keine Koaleszenz feststellbar, weder von Auge noch mit der Lupe

Anschliessend werden die Teilwerte für alle Farbkeile zusammen gezählt. Diese Summe ist damit ein Mass für die Bildhomogenität und wird hier Bildhomogenitätsmass genannt. Muster mit guter Bildqualität, ohne Koaleszenz in jedem Farbkeil, haben das Bildhomogenitätsmass 7. Muster mit äusserst schlechter Bildqualität haben das Bildhomogenitätsmass 0, d. h. in allen Farbkeilen wird Koaleszenz beobachtet.

### 2. Glanz

Der Glanz wird mit einem Glanzmessgerät (BYK Gardner Micro-Tri-Gloss) gemäss den Angaben der Normen ISO 2813 und ISO 15994 gemessen. Angegeben wird der Glanz bei einer Geometrie von 60°.

### 3. Grösse des aufgespannten Volumens im Farbraum (Gamut)

Auf die erfindungsgemässen Aufzeichnungsmaterialien wurde mit dem Tintenstrahldrucker EPSON 890 (Druckereinstellungen: Premium Glossy Photo Paper, 720 dpi, High Speed) mit den Originaltinten Farbfelder in den Farben Gelb, Rot, Purpur, Blau, Blaugrün, Grün und Schwarz in der Druckstufe 100 % gedruckt.
Nach den Angaben von G. Wyszecki und W. Stiles, "Color Science Concepts and Methods, Quantitative Data and Formulae", Verlag John Wiley & Sons, 2. Ausgabe 1982, ISBN 0-471-02106-7, Seiten 164 - 169 und Seite 829, wurden die Farbkoordinaten L*a*b* der Farben Gelb, Rot, Purpur, Blau, Blaugrün, Grün, Schwarz und Weiss gemessen und das durch die acht Farben aufgespannte Volumen des L*a*b*-Farbraums berechnet.

### Beispiele mit Ergebnissen

### Beispiel 1

### Herstellung von mit Lanthan dotiertem Aluminiumoxid/hydroxid (2.2 Molprozent bezogen auf Al₂O₃)

50 g des Aluminiumoxid/hydroxids HP 14/4 (erhältlich bei SASOL AG, Hamburg, Deutschland) mit einem Porenvolumen von 0.7 ml/g wurden unter guter mechanischer Rührung bei 20° C in 948 g bidestilliertem Wasser während 15 Minuten dispergiert. Danach wurde die Temperatur auf 90° C erhöht und anschliessend wurde 15 Minuten bei dieser Temperatur weitergerührt. Dann wurden 2.04 g kristallisiertes LaCl₃ (erhältlich bei Fluka Chemie AG, Buchs, Schweiz) als Festsubstanz zugegeben und es wurde während 120 Minuten weitergerührt. Der Festkörper wurde abfiltriert, dreimal mit bidestilliertem Wasser gewaschen und bei einer Temperatur von 110° C getrocknet.

### Herstellung von oberflächenmodifiziertem Siliziumdioxid

9 g Aluminiumchlorhydrat (Locron P, erhältlich bei Clariant AG, Muttenz, Schweiz) werden bei Raumtemperatur 5 Minuten unter guter Rührung mit 775.8 g deionisiertem Wasser gemischt. Der pH-Wert der erhaltenen Lösung beträgt 4.29. Danach wurden 9.1 g N-(2-Aminoethyl)-3-aminopropyltrimethoxysilan (erhältlich bei Degussa, Düsseldorf, Deutschland) zugegeben und es wurde 5 Minuten weiter gerührt. Anschliessend wurden während 30 Minuten unter Ultraschallbehandlung 206 g pyrogenes Siliziumdioxid Cab-O-Sil^{®} M-5 portionenweise zugegeben. Die Temperatur wurde auf 50° C erhöht und es wurde 50 Minuten weiter gerührt. Anschliessend wurde die Dispersion bei einer Abkühlrate von 1° C pro Minute auf eine Temperatur von 20° C abgekühlt.
Die Dispersion enthält 20.6 Gewichtsprozent Cab-O-Sil^{®} M-5, das BET-Porenvolumen beträgt 1.4 ml/g Siliziumdioxid.

### Untere nanoporöse Schicht

Nach guter mechanischer Rührung während weiteren 2 Stunden wurden 58.25 g der Dispersion des obigen oberflächenmodifizierten Siliziumdioxids mit 7.68 g deionisiertem Wasser unter guter mechanischer Rührung verdünnt. Anschliessend wurden Netzmittel sowie 27 g einer wässrigen Lösung (10 %) des Polyvinylalkohols Mowiol 4088 (erhältlich bei Clariant AG, Muttenz, Schweiz) zugegeben und das Gemisch 2 Minuten mit Ultraschall behandelt. Zum Schluss wurden 5.5 g einer wässrig-methanolischen Lösung (3:1,10 %) von Borsäure zugegeben und das Endgewicht mit deionisiertem Wasser auf 100 g eingestellt.
140 g/m² dieser Giesslösung wurden bei einer Temperatur von 40° C auf einen polyethylenbeschichteten Papierträger aufgebracht und anschliessend wurde der begossene Träger 60 Minuten bei einer Temperatur von 30° C getrocknet.
1 m² des begossenen Trägers enthält 16.8 g SiO₂ und somit beträgt das Porenvolumen der nanoporösen Schicht 23.5 ml.

### Obere nanoporöse Schicht

16.2 g des obigen, mit Lanthan dotierten Aluminiumoxid/hydroxids mit einem Porenvolumen von 0.70 ml/g wurden bei einer Temperatur 40° C in einem Gemisch von 37.15 g deionisiertem Wasser und 2.92 g einer wässrigen Lösung (9 %) von Milchsäure dispergiert. Anschliessend wurden 8.74 g der oben beschriebenen wässrigen Dispersion von Cab-O-Sil^{®} M-5 zugegeben und es wurde 5 Minuten weiter gerührt. Anschliessend wurden 7.2 g einer wässrigen Lösung (10 %) des Polyvinylalkohol Mowiol 2688 (erhältlich bei Clariant AG, Muttenz, Schweiz) und 16 g einer wässrigen Lösung (9 %) des Polyvinylalkohols Mowiol 5698 (erhältlich bei Clariant AG, Muttenz, Schweiz) sowie Netzmittel zugegeben und die Lösung 3 Minuten mit Ultraschall behandelt. Zum Schluss wurden 4.6 g einer wässrig-methanolischen Lösung (3 : 1, 10 %) von Borsäure zugegeben und das Endgewicht mit deionisiertem Wasser auf 100 g eingestellt.
24 g/m² dieser Giesslösung wurden bei einer Temperatur von 40° C auf den mit der unteren nanoporösen Schicht versehenen Papierträger aufgebracht und anschliessend wurde der begossene Träger 60 Minuten bei einer Temperatur von 30° C getrocknet.
1 m² des begossenen Trägers enthält in der oberen Schicht 3.89 g des mit Lanthan dotierten Aluminiumoxid/hydroxids und 0.43 g SiO₂ und somit beträgt das Porenvolumen der nanoporösen Schicht 3.3 ml.

1 m² dieses Aufzeichnungsmaterials hat somit ein Porenvolumen von 26.8 ml. Nach dem Druck unter Verwendung des Tintenstrahldruckers EPSON 890 zeigte dieses Aufzeichnungsmaterial das Bildhomogenitätsmass 7.

### Beispiel 2

13 g des obigen, mit Lanthan dotierten Aluminiumoxid/hydroxids HP 14/4 mit einem Porenvolumen von 0.7 ml/g wurden unter guter mechanischer Rührung bei einer Temperatur von 40° C in einem Gemisch von 58.84 g deionisiertem Wasser und 3.24 g einer wässrigen Lösung (9 %) von Milchsäure während 15 Minuten dispergiert. Anschliessend wurden Netzmittel, 4.77 g einer wässrigen Lösung (10 %) des Polyvinylalkohols Mowiol 2688, 10.59 g einer wässrigen Lösung (9 %) des Polyvinylalkohols Mowiol 5698 zugegeben und die erhaltene Lösung 3 Minuten mit Ultraschall behandelt. Zum Schluss wurden 5.5 g einer wässrig-methanolischen Lösung (3 : 1, 10 %) von Borsäure zugegeben und das Endgewicht mit deionisiertem Wasser auf 100 g eingestellt.
36 g/m² dieser Giesslösung wurden bei einer Temperatur von 40° C auf den mit der unteren nanoporösen Schicht aus Beispiel 1 versehenen Papierträger aufgebracht und anschliessend wurde der begossene Träger 60 Minuten bei einer Temperatur von 30° C getrocknet.
1 m² des begossenen Trägers enthält in der oberen Schicht 4.7 g des mit Lanthan dotierten Aluminiumoxid/hydroxids HP 14/4 und damit beträgt das Porenvolumen der oberen nanoporösen Schicht 3.3 ml.
1 m² dieses Aufzeichnungsmaterials hat somit ein Porenvolumen von 26.8 ml. Nach dem Druck unter Verwendung des Tintenstrahldruckers EPSON 890 zeigte dieses Aufzeichnungsmaterial das Bildhomogenitätsmass 3.

### Beispiel 3

Dieses Beispiel entspricht Beispiel 1 mit dem Unterschied, dass die untere Schicht 12.5 g/m² (statt 16.8 g/m²) Siliziumdioxid enthält und die obere Schicht 12.0 g/m² (statt 4.3 g/m²) der Mischung von mit Lanthan dotiertem Aluminiumoxid/hydroxid und Siliziumdioxid enthält.
1 m² dieses Aufzeichnungsmaterials hat somit ebenfalls ein Porenvolumen von 26.8 ml.
Nach dem Druck unter Verwendung des Tintenstrahldruckers EPSON 890 zeigte dieses Aufzeichnungsmaterial das Bildhomogenitätsmass 7.

### Beispiel 4

Dieses Vergleichsbeispiel entspricht Beispiel 2 mit dem Unterschied, dass die untere Schicht 12.5 g/m² (statt 16.8 g/m²) Siliziumdioxid enthält und die obere Schicht 13.1 g/m² (statt 4.7 g/m²) mit Lanthan dotiertes Aluminiumoxid/hydroxid enthält.
1 m² dieses Aufzeichnungsmaterials hat somit ebenfalls ein Porenvolumen von 26.8 ml.
Nach dem Druck unter Verwendung des Tintenstrahldruckers EPSON 890 zeigte dieses Aufzeichnungsmaterial das Bildhomogenitätsmass 7.

### Beispiele 5a - 5f

Die untere nanoporöse Schicht entspricht der unteren nanoporösen Schicht von Beispiel 1 mit dem Unterschied, dass die Menge des Siliziumdioxids 16.3 g/m² (statt 16.8 g/m²) SiO₂ und damit das Porenvolumen 22.7 ml/m² (statt 23.5 ml/m²) beträgt.
In der oberen nanoporösen Schicht wurde das Verhältnis zwischen dem mit Lanthan dotierten nanokristallinen, nanoporösen Aluminiumoxid/hydroxid und dem nanoporösen Siliziumdioxid gemäss den Angaben von Tabelle 1 variiert.

**Tabelle 1**

| Beispiel | Menge des Siliziumdioxids (Gewichtsprozent) | Menge des mit Lanthan dotierten Aluminiumoxid/hydroxids (Gewichtsprozent) |
|---|---|---|
| 5a | 0 | 100 |
| 5b | 5 | 95 |
| 5c | 10 | 90 |
| 5d | 15 | 85 |
| 5e | 20 | 80 |
| 5f | 25 | 75 |
| 5g | 30 | 70 |

Alle Aufzeichnungsmaterialien haben ein Porenvolumen von 26 ml/m². Nach dem Druck unter Verwendung des Tintenstrahldruckers EPSON 890 zeigten alle Aufzeichnungsmaterialien ausser Beispiel 5a das Bildhomogenitätsmass 7.

Die Ergebnisse der Glanzmessung, die berechnete Farbsättigung und das Bildhomogenitätsmass sind in Tabelle 2 zusammengestellt:

**Tabelle 2**

| Beispiel | Glanz | Farbsättigung | Bildhomogenitätsmass |
|---|---|---|---|
| 5a | 52.6 | 344'000 | 3 |
| 5b | 53 | 343'791 | 7 |
| 5c | 44 | 322'324 | 7 |
| 5d | 39 | 294'000 | 7 |
| 5e | 35 | 271'752 | 7 |
| 5f | 33 | 267'345 | 7 |
| 5g | 29 | 249'519 | 7 |

Die Ergebnisse in Tabelle 2 zeigen, dass die Bildhomogenität schlecht ist, wenn die obere nanoporöse Schicht neben dem mit Lanthan dotierten Aluminiumoxid/hydroxid kein Siliziumdioxid mit positiv geladener Oberfläche enthält. Die Bildhomogenität wird sofort besser, wenn die obere nanoporöse Schicht neben dem mit Lanthan dotierten nanokristallinen, nanoporösen Aluminiumoxid/hydroxid nanoporöses Siliziumdioxid mit positiv geladener Oberfläche enthält. Sowohl der Glanz wie auch die Farbsättigung nehmen aber bei mehr als 5 Gewichtsprozent Siliziumdioxid in der oberen nanoporösen Schicht ab. Höhere Mengen als 15 Gewichtsprozent an nanoporösem Siliziumdioxid mit positiv geladener Oberfläche in der oberen nanoporösen Schicht führen wegen des kleineren Farbraums und des tieferen Glanzes zu einer nicht mehr akzeptablen Bildqualität.
Einzelschichten, welche nur mit Lanthan dotiertes nanokristallines, nanoporöses Aluminiumoxid/hydroxid enthalten, haben eine Farbsättigung von 350'000 und einen Glanz von 55 %; Einzelschichten, welche nur nanoporöses Siliziumdioxid mit einer positiv geladenen Oberfläche enthalten, haben eine Farbsättigung von 240'000 und einen Glanz von 21 %.

### Beispiele 6a - 6d

### Herstellung von oberflächenmodifiziertem Siliziumdioxid

22 g Aerosil 200 V mit einem BET-Porenvolumen von 1.1 ml/g wurden bei einer Temperatur von 20° C in einer Mischung von 68.54 g deionisiertem Wasser und 1.0 g einer wässrigen Lösung (9 %) von Milchsäure während 2 Minuten durch Ultraschallbehandlung dispergiert. Anschliessend wurden 3.62 g Locron P zugegeben, das Gemisch wurde auf eine Temperatur von 25° C erwärmt und 3 Stunden bei dieser Temperatur gerührt. Dann wurde das Gemisch auf eine Temperatur von 40° C erwärmt. Die erhaltene Dispersion hatte einen pH-Wert von 3.39. Nach Zugabe von 4.84 g einer wässrigen Lösung (10 %) von Kaliumhydroxid und Einstellung des Endgewichts auf 100 g hatte die Dispersion einen pH-Wert von 3.71. Anschliessend wurde das Gemisch nochmals eine Minute mit Ultraschall behandelt.

### Untere nanoporöse Schicht

Nach guter mechanischer Rührung während weiteren 2 Stunden wurden 50 g der obigen Dispersion des obigen oberflächenmodifizierten Siliziumdioxids mit 7.68 g deionisiertem Wasser bei einer Temperatur von 40° C unter guter mechanischer Rührung dispergiert. Anschliessend wurden Netzmittel sowie 33.73 g einer wässrigen Lösung (7.5 %) des Polyvinylalkohols Mowiol 5698 zugegeben und das Gemisch 2 Minuten mit Ultraschall behandelt. Zum Schluss wurden 4 g einer wässrig-methanolischen Lösung (3 : 1, 10 %) von Borsäure zugegeben und das Endgewicht mit deionisiertem Wasser auf 100 g eingestellt.
113.6 g dieser Giesslösung wurden bei einer Temperatur von 40° C auf einen opaken Polyesterträger aufgebracht und anschliessend wurde der begossene Träger 60 Minuten bei einer Temperatur von 30° C getrocknet.
1 m² des begossenen Trägers enthält 12.5 g SiO₂ und damit hat die untere nanoporöse Schicht ein Porenvolumen von 13.7 ml.

### Obere nanoporöse Schicht

10. 8 g des mit Lanthan dotierten Aluminiumoxid/hydroxids HP 14/4 aus Beispiel 1 wurden bei einer Temperatur von 40° C in einem Gemisch von 62.43 g deionisiertem Wasser und 1.94 g einer wässrigen Lösung (9 %) von Milchsäure dispergiert. Dann wurden 5.45 g der oben beschriebenen Dispersion von Aerosil 200 V langsam unter guter mechanischer Rührung zugegeben. Anschliessend wurden Netzmittel, 4.16 g einer wässrigen Lösung (10 %) des Polyvinylalkohols Mowiol 2688 und 11.09 g einer wässrigen Lösung (7.5 %) des Polyvinylalkohols Mowiol 5698 zugegeben. Zum Schluss wurden 3.12 g einer wässrigen Lösung (10 %) von Borsäure zugegeben und das Endgewicht mit deionisiertem Wasser auf 100 g eingestellt.
Auf den mit der unteren nanoporösen Schicht versehenen opaken Polyesterträger wurden verschiedene Mengen der obigen Giesslösung aufgebracht. Anschliessend wurde der begossene Träger 60 Minuten bei einer Temperatur von 30° C getrocknet. Die Auftragsmengen der oberen Schichten, die resultierenden Porenvolumen der Doppelschichtgüsse und das Bildhomogenitätsmass sind in Tabelle 3 zusammengestellt.

**Tabelle 3**

| Beispiel | Auftragsmenge der Giesslösung der oberen Schicht (g/m²) | Porenvolumen (ml/m²) | Bildhomogenitätsmass |
|---|---|---|---|
| 6a | 47.5 | 17.9 | 2.5 |
| 6b | 65.0 | 19.5 | 3.5 |
| 6c | 77.5 | 20.6 | 4.0 |
| 6d | 95 | 22.3 | 5.5 |

Ein Vergleich der Ergebnisse in Tabelle 3 zeigt sofort, dass die Bildhomogenität mit zunehmender Auftragsmenge und damit zunehmendem Porenvolumen der oberen nanoporösen Schicht zunimmt.

### Beispiel 7

Die Giesslösung der unteren nanoporösen Schicht ist diejenige von Beispiel 6a, aber sie wird mit einer höheren Auftragsmenge von 100 g/m² (statt 56.8 g/m²) auf den Träger aufgebracht. Die obere nanoporösen Schicht ist die gleiche wie in Beispiel 6b. Damit hat 1 m² des begossenen Trägers ein Porenvolumen von 30 ml. Nach dem Druck unter Verwendung des Tintenstrahldruckers EPSON 890 zeigte dieses Aufzeichnungsmaterial (das in der oberen nanoporösen Schicht eine Mischung von mit Lanthan dotiertem nanokristallinem, nanoporösem Aluminiumoxid/hydroxid und nanoporösem Siliziumdioxid mit einer positiv geladenen Oberfläche enthält) das Bildhomogenitätsmass 5.5.

### Beispiel 8

Die untere nanoporöse Schicht ist diejenige von Beispiel 7. Die Giesslösung der oberen nanoporösen Schicht ist diejenige von Beispiel 2, aber sie wird mit einer höheren Auftragsmenge von 63.5 g/m² (statt 36 g/m²) auf den Träger aufgebracht.
1 m² dieses Aufzeichnungsmaterials hat damit ebenfalls ein Porenvolumen von 30 ml.
Nach dem Druck unter Verwendung des Tintenstrahldruckers EPSON 890 zeigte dieses Aufzeichnungsmaterial (das in der oberen nanoporösen Schicht ausschliesslich mit Lanthan dotiertes Aluminiumoxid/hydroxid enthält) das Bildhomogenitätsmass 1.5, einen wesentlich tieferen Wert als derjenige in Beispiel 7.

### Beispiele 9a - 9d

### Giesslösung der unteren nanoporösen Schicht

60.7 g der Dispersion des oberflächenmodifizierten Siliziumdioxids aus Beispiel 1 wurden unter guter mechanischer Rührung auf eine Temperatur von 40° C erwärmt. Anschliessend wurden Netzmittel und 33.8 g einer wässrigen Lösung (8 %) des Polyvinylalkohols Mowiol 4088 zugesetzt und das Gemisch 2 Minuten mit Ultraschall behandelt. Nachher wurden unter guter mechanischer Rührung 5 g einer wässrig-methanolischen Lösung (10 %; 3 : 1) von Borsäure zugegeben und das Endgewicht mit deionisiertem Wasser auf 100 g eingestellt.

### Giesslösung der Zwischenschicht

340 g des mit Lanthan dotierten Aluminiumoxid/hydroxids aus Beispiel 1 wurden bei einer Temperatur von 40° C in einem Gemisch von 573.3 deionisiertem Wasser und 84.7 g einer wässrigen Lösung (9 %) von Milchsäure unter guter mechanischer Rührung dispergiert. Anschliessend wurden Netzmittel zugegeben. Die Zwischenschicht enthält kein Bindemittel.

### Giesslösung der oberen nanoporösen Schicht

62.8 g dieser Dispersion für die Zwischenschicht wurden unter guter mechanischer Rührung auf eine Temperatur von 40° C erwärmt. Anschliessend wurden 7.3 g einer wässrigen Lösung (10 %) des Polyvinylalkohols Mowiol 2688 und 22.7 g einer wässrigen Lösung (7.5 %) des Polyvinylalkohols Mowiol 5698 sowie Netzmittel zugegeben. Nachher wurden unter guter mechanischer Rührung 5 g einer wässrigen Lösung (4 %) von Borsäure zugegeben und das Endgewicht mit deionisiertem Wasser auf 100 g eingestellt.

### Güsse

Diese drei Giesslösungen wurden mit Hilfe eines Mehrschichtengiessers bei einer Temperatur von 40° C miteinander auf einen polyethylenbeschichteten Papierträger aufgebracht. Die Pigmentmengen der verschiedenen Güsse sind in Tabelle 4 zusammengestellt.

**Tabelle 4**

| Beispiel | Untere nanoporöse Schicht (g/m²) | Zwischenschicht (g/m²) | Obere nanoporöse Schicht (g/m²) |
|---|---|---|---|
| 9a | 12.0 | 2.1 | 14.2 |
| 9b | 12.0 | - | 16.3 |
| 9c | 16.0 | 4.1 | 4.2 |
| 9d | 16.0 | - | 8.3 |

Alle diese Aufzeichnungsmaterialien haben paarweise (Beispiele 9a und 9b sowie Beispiele 9c und 9d) die gleiche Pigmentauftragsmenge (sowohl bezüglich des nanoporösen Siliziumdioxids wie auch bezüglich des mit Lanthan dotierten nanokristallinen, nanoporösen Aluminiumoxid/hydroxids). Alle vier Aufzeichnungsmaterialien haben das gleiche Porenvolumen von 28.2 ml/m².

Die Homogenität von Bildern dieser Beispiele ist in Tabelle 5 zusammengestellt. Angegeben werden die Noten von visuellen Beurteilungen (5: am schlechtesten; 1: am besten).

**Tabelle 5**

| Beispiel | Homogenität von Bildern (Drucker Epson 750) | Homogenität von Bildern (Drucker Epson 7600) |
|---|---|---|
| 9a | 2 | 2 |
| 9b | 4 | 5 |
| 9c | 1 | 1 |
| 9d | 3 | 2 |

Die Ergebnisse in Tabelle 5 zeigen sofort, dass die Aufzeichnungsmaterialien, welche eine bindemittelfreie Zwischenschicht enthalten (Beispiele 9a und 9c), mit beiden Druckern Bilder mit einer besseren Homogenität ergeben als die Aufzeichnungsmaterialien, welche keine solche Zwischenschicht enthalten (Beispiele 9b und 9d).

## Patentansprüche

1. Aufzeichnungsmaterial für den Tintenstrahldruck, das auf einem Träger mindestens zwei Tintenaufnahmeschichten bestehend aus Bindemitteln und je mindestens einer nanoporösen anorganischen Verbindung enthält, die dem Träger benachbarte Schicht nanoporöses Siliziumdioxid mit einer positiv geladenen Oberfläche und die vom Träger weiter entfernte Schicht nanokristallines, nanoporöses Aluminiumoxid/hydroxid enthält, **dadurch gekennzeichnet, dass** das nanoporöse Siliziumdioxid mit positiv geladener Oberfläche eine durchschnittliche Grösse der Primärpartikel von höchstens 20 nm und das nanokristalline, nanoporöse Aluminiumoxid/hydroxid eine Grösse der Primärpartikel zwischen 5 nm und 15 nm aufweist.

2. Aufzeichnungsmaterial gemäss Anspruch 1, **dadurch gekennzeichnet, dass** die dem Träger benachbarte Tintenaufnahmeschicht 5 g/m² bis 25 g/m² nanoporöses Siliziumdioxid mit einer positiv geladenen Oberfläche enthält.

3. Aufzeichnungsmaterial gemäss den Ansprüchen 1 und 2, **dadurch gekennzeichnet, dass** die vom Träger weiter entfernte Schicht zusätzlich noch nanoporöses Siliziumdioxid mit einer positiv geladenen Oberfläche enthält.

4. Aufzeichnungsmaterial gemäss Anspruch 3, **dadurch gekennzeichnet, dass** die Menge des nanoporösen Siliziumdioxids mit einer positiv geladenen Oberfläche 0.5 bis 15 Gewichtsprozent bezogen auf die Gesamtmenge an nanokristallinem, nanoporösem Aluminiumoxid/hydroxid und nanoporösem Siliziumdioxid mit einer positiv geladenen Oberfläche in dieser Schicht beträgt.

5. Aufzeichnungsmaterial gemäss den Ansprüchen 1 bis 4, **dadurch gekennzeichnet, dass** das Aufzeichnungsmaterial zwischen diesen beiden Tintenaufnahmeschichten eine zusätzliche Schicht enthält, welche nanokristallines, nanoporöses Aluminiumoxid/hydroxid, nanoporöses Siliziumdioxid mit einer positiv geladenen Oberfläche oder ein Gemisch dieser beiden Verbindungen enthält.

6. Aufzeichnungsmaterial gemäss Anspruch 5, **dadurch gekennzeichnet, dass** das Aufzeichnungsmaterial in der Zwischenschicht zusätzlich noch ein Bindemittel enthält.

7. Aufzeichnungsmaterial gemäss den Ansprüchen 1 bis 6, **dadurch gekennzeichnet, dass** das nanokristalline, nanoporöse Aluminiumoxid/hydroxid ein oder mehrere Elemente der Ordnungszahl 57 bis 71 des Periodischen Systems der Elemente in einer Menge zwischen 0.2 und 2.5 Molprozent bezogen auf Al₂O₃ enthält.

8. Aufzeichnungsmaterial gemäss den Ansprüchen 1 bis 7, **dadurch gekennzeichnet, dass** das nanoporöse Siliziumdioxid mit einer positiv geladenen Oberfläche durch eine Oberflächenmodifikation von pyrogenem Siliziumdioxid mit Aluminiumchlorhydrat, mit einem Aminoorganosilan oder mit den Reaktionsprodukten mindestens eines Aminoorganosilans und einer Verbindung des dreiwertigen Aluminiums hergestellt wird.

9. Aufzeichnungsmaterial gemäss den Ansprüchen 1 bis 8, **dadurch gekennzeichnet, dass** das Bindemittel Polyvinylalkohol ist.

10. Aufzeichnungsmaterial gemäss den Ansprüchen 1 bis 9, **dadurch gekennzeichnet, dass** als Träger beschichtetes oder unbeschichtetes Papier, durchsichtiger oder opaker Polyester oder textile Fasermaterialien verwendet werden.

11. Aufzeichnungsmaterial für den Tintenstrahldruck gemäss den Ansprüchen 1 bis 10, **dadurch gekennzeichnet, dass** das Aufzeichnungsmaterial mit Hilfe des Extrusions-, Luftmesser-, Schlitz-, Kaskaden- oder Vorhanggussverfahrens hergestellt wird.

## Claims

1. Recording sheet for ink jet printing, having coated onto a support at least two ink-receiving layers, each consisting of binders and at least one nanoporous inorganic compound, the ink-receiving layer situated next to the support containing nanoporous silicon dioxide with a positively charged surface and the ink-receiving layer situated further away from the support containing nanocrystalline, nanoporous aluminium oxide/hydroxide, **characterised by** the fact that the nanoporous silicon dioxide with a positively charged surface has an average size of the primary particles of at most 20 nm and the nanocrystalline, nanoporous aluminium oxide/hydroxide has an average size of the primary particles between 5 nm and 15 nm.

2. Recording sheet for ink jet printing according to claim 1, **characterised by** the fact that the ink-receiving layer situated next to the support contains from 5 g/m² to 25 g/m² of nanoporous silicon dioxide with a positively charged surface.

3. Recording sheet for ink jet printing according to claims 1 and 2, **characterised by** the fact that the ink-receiving layer situated further away from the support contains, in addition, nanoporous silicon dioxide with a positively charged surface.

4. Recording sheet for ink jet printing according to claim 3, **characterised by** the fact that the amount of nanoporous silicon dioxide with a positively charged surface is from 0.5 percent by weight to 15 percent by weight relative to the total amount of the nanocrystalline, nanoporous aluminium oxide/hydroxide and of the nanoporous silicon dioxide with a positively charged surface in this layer.

5. Recording sheet for ink jet printing according to claims 1 to 4, **characterised by** the fact that the recording sheet contains an intermediate layer between the two ink-receiving layers, comprising nanocrystalline, nanoporous aluminium oxide/hydroxide, nanoporous silicon dioxide with a positively charged surface or a mixture of these compounds.

6. Recording sheet for ink jet printing according to claim 5, **characterised by** the fact that this intermediate layer comprises in addition a binder.

7. Recording sheet for ink jet printing according to claims 1 to 6, **characterised by** the fact that the nanocrystalline, nanoporous aluminium oxide/hydroxide contains one or more elements with atomic numbers 57 to 71 of the periodic system of the elements in an amount of from 0.04 to 2.5 mole percent relative to Al₂O₃.

8. Recording sheet for ink jet printing according to claims 1 to 7, **characterised by** the fact that the nanoporous silicon dioxide with a positively charged surface is prepared by a treatment of the surface of fumed silicon dioxide with aluminium chlorohydrate, an aminoorganosilane or the reaction products of at least one aminoorganosilane with a compound of trivalent aluminium.

9. Recording sheet for ink jet printing according to claims 1 to 8, **characterised by** the fact that the binder is polyvinyl alcohol.

10. Recording sheet for ink jet printing according to claims 1 to 9, **characterised by** the fact that the support is selected from normal or coated paper, transparent or opaque polyester and fibrous textile materials.

11. Recording sheet for ink jet printing according to claims 1 to 10, **characterised by** the fact that the recording sheet is manufactured by extrusion coating, air knife coating, doctor blade coating, cascade coating or curtain coating.

## Revendications

1. Feuille d'enregistrement destinée à l'impression par jet d'encre, qui comprend, sur un support, au moins deux couches réceptrices d'encre, qui, chacune, contiennent des liants et au moins un composé minéral nanoporeux, la couche avoisinante du support contient du dioxyde de silice nanoporeux ayant une surface chargée positivement et la couche plus éloignée du support contient de l'oxyde/hydroxyde d'aluminium nanocrystallin, nanoporeux, **caractérisée par le fait que** le dioxyde de silice nanoporeux ayant une surface chargée positivement a une taille moyenne des particules primaires d'au maximum 20 nm et l'oxyde/hydroxyde d'aluminium nanocrystallin, nanoporeux a une taille des particules primaires située entre 5 nm et 15 nm.

2. Feuille d'enregistrement selon la revendication 1, **caractérisée par le fait que** la couche réceptrice d'encre avoisinante du support contient entre 5 g/m² et 25 g/m² de dioxyde de silice nanoporeux ayant une surface chargée positivement.

3. Feuille d'enregistrement selon les revendications 1 et 2, **caractérisée par le fait que** la couche plus éloignée du support contient en outre du dioxyde de silice nanoporeux ayant une surface chargée positivement.

4. Feuille d'enregistrement selon la revendication 3, **caractérisée par le fait que** dans cette couche la quantité pondérale du dioxyde de silice nanoporeux ayant une surface chargée positivement est située entre 0.5 et 15 pour-cent par rapport à la quantité totale de l'oxyde/hydroxyde d'aluminium nanocrystallin, nanoporeux et du dioxyde de silice nanoporeux ayant une surface chargée positivement.

5. Feuille d'enregistrement selon les revendications 1 à 4, **caractérisée par le fait que** la feuille d'enregistrement contient, entre ces couches réceptrices d'encre, une couche supplémentaire qui contient de l'oxyde/hydroxyde d'aluminium nanocrystallin, nanoporeux et du dioxyde de silice nanoporeux ayant une surface chargée positivement ou un mélange de ces deux composés.

6. Feuille d'enregistrement selon la revendication 5, **caractérisée par le fait que** la feuille d'enregistrement contient en additionnellement un liant dans cette couche intermédiaire.

7. Feuille d'enregistrement selon les revendications 1 à 6, **caractérisée par le fait que** l'oxyde/hydroxyde d'aluminium nanocrystallin, nanoporeux contient 0.04 à 2.5 pour-cent molaires d'un ou de plusieurs éléments ayant les numéros atomiques 57 à 71 de la classification périodique des éléments par rapport à l'Al₂O₃.

8. Feuille d'enregistrement selon les revendications 1 à 7, **caractérisée par le fait que** le dioxyde de silice nanoporeux ayant une surface chargée positivement est préparé par une modification de la surface du dioxyde de silice pyrogène par un traitement avec le chlorhydrate d'aluminium, un aminoorganosilane ou les produits de réaction entre au moins un aminoorganosilane et un composé de l'aluminium trivalent.

9. Feuille d'enregistrement selon les revendications 1 à 8, **caractérisée par le fait que** le liant est l'alcool polyvinylique.

10. Feuille d'enregistrement selon les revendications 1 à 9, **caractérisée par le fait que** le support est le papier normal ou enduit, le polyester transparent ou opaque ou les matériaux textiles fibreux.

11. Feuille d'enregistrement selon les revendications 1 à 9, **caractérisée par le fait que** la feuille d'enregistrement est préparée par étendage par extrusion, étendage à lame d'air, étendage à la filière, étendage en cascade ou étendage en rideau.
